Europäisches Patentamt

**European Patent Office**

**Office européen des brevets**

(11) Veröffentlichungsnummer: **0 243 534**
B1

(12) **EUROPÄISCHE PATENTSCHRIFT**

(45) Veröffentlichungstag der Patentschrift:
27.12.90

(21) Anmeldenummer: 86113554.9

(22) Anmeldetag: 02.10.86

(51) Int. Cl.⁵: **F02D 41/14,** F02D 35/00,
F02B 11/00

(54) Verfahren zur Abgasentgiftung einer Verbrennungskraftmaschine unter Verwendung eines katalytischen Systems und Vorrichtung zur Durchführung des Verfahrens.

(30) Priorität: 26.04.86 DE 3614251

(43) Veröffentlichungstag der Anmeldung:
04.11.87 Patentblatt 87/45

(45) Bekanntmachung des Hinweises auf die Patenterteilung:
27.12.90 Patentblatt 90/52

(84) Benannte Vertragsstaaten:
AT BE CH DE ES FR GB GR IT LI LU NL SE

(56) Entgegenhaltungen:
WO-A-83/00057
DE-A- 2 548 086
DE-A- 2 805 519
DE-A- 3 023 181
DE-A- 3 100 294
GB-A- 721 025
GB-A- 2 060 949
US-A- 3 911 675

(73) Patentinhaber: F & O Electronic Systems GmbH,
Kirchenstrasse 38, D-6901 Neckarsteinach(DE)

(72) Erfinder: Obstfelder, Günther, Panoramastrasse 28,
D-6940 Weinheim-Lützelsachsen(DE)
Erfinder: Obstfelder, Matthias, Panoramastrasse 28,
D-6940 Weinheim-Lützelsachsen(DE)
Erfinder: Seitz, Hatto, Dr. Prof., Alemannenstrasse 1,
D-6905 Schriesheim(DE)

(74) Vertreter: Mierswa, Klaus, Dipl.-Ing.,
Friedrichstrasse 171, D-6800 Mannheim 24(DE)

## Beschreibung

Die Erfindung geht aus von einem Betriebsverfahren einer Brennkraftmaschine mit katalytischem Abgasreiniger nach dem Oberbegriff des Anspruchs 1 und einer Brennkraftmaschine zur Durchführung des Betriebsverfahrens nach dem Oberbegriff des Anspruchs 2.

Eine Brennkraftmaschine nach dem Fremdzünder-Prinzip emittiert im wesentlichen Kohlenmonoxid (CO), Stickoxide (NOx) und Kohlenwasserstoffe. Während es sich beim Kohlenmonoxid und bei den Stickoxiden um chemisch eindeutig definierte Verbindungen handelt, ist unter dem Oberbegriff «Kohlenwasserstoffe» eine große Anzahl von Verbindungen zu verstehen, die von Methan bis hin zu kompliziert aufgebauten Verbindungen reichen, von denen einige als krebserregend verdächtig sind.

Der angewandten Abgasreinigungstechnologie von Brennkraftmaschinen nach dem Fremdzünder-Prinzip (Ottomotoren) mit dem Dreiwegekatalysator und der Lambda-Sonde liegen im wesentlichen folgende chemische Reaktionen zugrunde:

(1) $C_mH_n + (m + n/4)O_2 = mCO_2 + n/2H_2O$
(2) $CO + 1/2O_2 = CO_2$
(3) $CO + NO = 1/2N_2 + CO_2$
(4) $C_mH_n + 2(m + n/4)NO = (m + n/4)N_2 + n/2H_2O + mCO_2$
(5) $CO + H_2O = CO_2 + H_2$
(6) $CH + 2H_2O = CO_2 + (2 + n/2)H_2$
(7) $H_2 + NO = 1/2N_2 + H_2O$
(8) $H_2 + 1/2O_2 = H_2O$

Die simultane Entfernung der Schadstoffe CO, NOx und $C_mH_n$ setzen voraus, daß ein Kraftstoff-Luft-Verhältnis um den stöchiometrischen Wert Lambda = 1 in engen Grenzen eingehalten wird. Nur in diesem engen Bereich, der als «Lambda-Fenster» bezeichnet wird, wird ein hoher Umsatzgrad für die drei Schadstoffkomponenten erreicht. Eine gewisse Verbreiterung des «Lambda-Fenster» läßt sich mit modifizierten Katalysatoren erzielen.

Voraussetzung für hohe Umsatzgrade ist, daß das Kraftstoff-Luft-Verhältnis in einem engen Bereich um das theoretisch für eine vollständige Verbrennung nötige Verhältnis von Lambda = 1 schwankt. Dies wird erreicht durch einen Regelkreis mit der sogenannten Lambda-Sonde als Sauerstoffmeßgerät in den Abgasen. Dieses Verfahren ergibt die günstigste Lösung, wenn gleichzeitig die Abgasreinigung und der Treibstoffverbrauch optimiert werden. Diese Maßnahmen betreffen somit nur Brennkraftmaschinen nach dem Fremdzünder-Prinzip. Insgesamt stellt die Abgasreinigung mit einem Dreiwegekatalysator einen Kompromiß dar aus Abgas, Kraftstoffverbrauch und Fahrverhalten. Eine vollständige Abgasentgiftung ist bis heute nicht möglich, es werden nur Entgiftungsgrade bis maximal 90% erreicht. Es wird hierzu auf die Veröffentlichung von Edgar Koberstein: Katalysatoren zur Reinigung von Autoabgasen, in: «Chemie in unserer Zeit», 18. Jahrgang, 1984, Nr. 2, Seite 37–45 verwiesen.

Die Problematik der Brennkraftmaschinen nach dem Selbstzünder-Prinzip, also der Dieselfahrzeuge, ist völlig anders als die der Brennkraftmaschinen nach dem Fremdzünder-Prinzip, also der Ottomotoren. Zwar gelten Dieselfahrzeuge im Vergleich zu Ottomotoren ohne Katalysator als umweltfreundlicher, doch sind sie im Vergleich zu Fahrzeugen mit geregeltem Katalysator erheblich weniger umweltfreundlich. Die Abgase enthalten hauptsächlich Stickoxide und Ruß haben wenig CH und CO (1/10 bis 1/20 gegenüber Ottomotoren). Mit zunehmender Leistungsabgabe und Fahrgeschwindigkeit nimmt allerdings die NOx-Emission erheblich zu, wobei gerade die Stickoxide seit 1977 als besonders gefährlich eingestuft werden. Auch nach Eliminierung des Rußes durch Filter ist eine weitere Abgasreinigung bei Dieselfahrzeugen nicht möglich, da zur Reduktion von NOx nicht die entsprechenden Mengen CO oder CH vorhanden sind.

Von entscheidender Bedeutung ist, daß die derzeitigen Dieselaggregate mit einem nicht optimalen thermodynamischen Wirkungsgrad betrieben werden. Mit thermisch beständigeren Wirkstoffen, z.B. Keramik, die bereits angewandt werden, läßt sich unter Erhöhung der Verbrennungstemperatur der Brennkraftmaschine der Wirkungsgrad von Dieselmotoren enorm steigern und bei bedeutender Kraftstoffeinsparung eine günstigere Energieausnutzung erzielen. Allerdings steigt bei einer solchen Erhöhung des Wirkungsgrades des Dieselmotors die NOx-Emission drastisch an, während dagegen die Rußbildung sowie die Emission von CO und CH praktisch vernachlässigbar klein werden.

Durch die WO 83/00057 ist bekannt geworden, daß durch die geregelte Zufuhr einer Schadstoffkomponente, zum Beispiel NH3, in den Abgasstrom einer nach dem Selbstzünder-Prinzip arbeitenden Brennkraftmaschine dem Schadstoff NOx die notwendige stöchiometrische Menge an NH3 bereitgestellt wird, um die katalytische Nachreaktion quantitativ zu ermöglichen.

Die DE-A 3 023 181 beinhaltet eine Brennkraftmaschine für Otto-Motoren mit einer ersten und einer zweiten Zylindereinheit, die jeweils mindestens einen Zylinder aufweisen, mit einem Belastungsdetektor zum Erfassen der augenblicklichen Betriebsbelastung der Brennkraftmaschine und zum Erzeugen eines eine niedrige Belastung angebenden Signals, wenn die Belastung der Brennkraftmaschine unter einer bestimmten Belastung liegt mit einer auf dieses Signal ansprechende erste Einrichtung zum Unterbrechen der Luftströmung an die zweite Zylindereinheit. Zum Zuführen einer gesteuerten Kraftstoffmenge an die erste und zweite Zylindereinheit ist eine Einspritzsteuerleitung zusammen mit einer Betriebsschaltung für Teilbetrieb vorgesehen, um in den Zylindereinheiten ein etwas mageres Luft-Kraftstoff-Gemisch zu erreichen, wobei die Betriebsschaltung für Teilbetrieb die Belastung, bei der die Brennkraftmaschine arbeitet, aus der Impulsbreite des Kraftstoffeinspritzimpulssignals bestimmt, um die Kraftstoffzufuhr an die zweite Zylindereinheit zu unterbrechen und die an die erste Zylindereinheit zu vergrößern, um in dieser ein etwas fettes Luft-Kraftstoff-Gemisch zu erreichen. Ein Abgasfühler dient zum Überwachen des Sauerstoffgehaltes der Abgase von der zweiten Zylindereinheit zum Steuern der Einspritzsteuerleitung zusammen mit der Betriebsschaltung für Teilbetrieb derart, daß die der Brennkraftmaschine zugeführte Kraftstoffmenge zur Einhaltung des stöchiometrischen Luft-Kraftstoff-Verhältnisses richtig ist.

Durch die DE-A 3 100 294 ist eine Brennkraftmaschine für Otto-Motoren mit Zylinderteilbetrieb bekannt geworden, mit einer ersten und einer zweiten Zylindereinheit jeweils mit wenigstens einem Zylinder und mit einem Absperrventil, das zwischen der ersten und der zweiten Zylindereinheit vorgesehen ist, sowie einem Abgasrezirkulationskanal zum Rezirkulieren des Abgases in die zweite Zylindereinheit, mit einem Abgasrezirkulationsventil, das im Abgasrezirkulationskanal vorgesehen ist, und mit einer Steuereinrichtung, um die zweite Zylindereinheit außer Betrieb zu setzen, wenn die Maschinenlast unter einem gegebenen Wert liegt. Die Steuereinrichtung stellt das alternative Öffnen und Schließen des Abgasrezirkulationsventils bzw. des Absperrventils sicher, wenn sich die Maschinenlast von einem niedrigen Wert auf einen hohen Wert ändert. Damit wird lediglich ein Kompromiß aus Abgas und Fahrverhalten erzielt.

Der Erfindung liegt die Aufgabe zugrunde, ein Betriebsverfahren zur Abgasentgiftung einer Brennkraftmaschine zu schaffen, mit dem unter erheblicher Erweiterung des stöchiometrischen Verhältnisses des Lambda-Wertes die Abgase praktisch vollständig entgiftet werden sollen, insbesondere unter Ausnutzung eines hohen Wirkungsgrades der Brennkraftmaschine; ebenso soll eine Brennkraftmaschine geschaffen werden, die die Abgase praktisch vollständig entgiftet.

Die Lösung dieser Aufgabe besteht erfindungsgemäß in den Merkmalen des Anspruchs 1. Eine erfindungsgemäße Brennkraftmaschine ist in Anspruch 2 gekennzeichnet. Weitere erfindungsgemäße Ausgestaltungen der Brennkraftmaschine sind in den Unteransprüchen 3–6 gekennzeichnet.

Das erfindungsgemäße Betriebsverfahren besitzt den hervorstechenden Vorteil, daß die Abgase von Brennkraftmaschinen praktisch vollständig entgiftet werden können und zwar unter Zuhilfenahme der bekannten Katalysatortechniken, wie sie heute für Brennkraftmaschinen nach dem Fremdzünder-Prinzip eingesetzt werden. In vorteilhafter Weise wird beim erfindungsgemäßen Betriebsverfahren der stöchiometrische Wert des Kraftstoff-Luft-Verhältnisses, also das «Lambda-Fenster», erheblich erweitert und die enge gegenseitige Abhängigkeit insbesondere der Schadstoffe Kohlenmonoxid und Stickoxid aufgehoben. Dadurch wird beim erfindungsgemäßen Betriebsverfahren gegenüber dem Stand der Technik ein weitaus größerer Freiheitsgrad hinsichtlich der motortechnischen Kompromißnotwendigkeiten erreicht.

In erfindungsgemäßer Anwendung können mit dem Betriebsverfahren Brennkraftmaschinen nach dem Fremdzünder-Prinzip praktisch vollständig entgiftet werden, wobei die Entgiftung die heute mit bekannten Katalysatortechniken erzielbaren Entgiftungen übertrifft.

Insbesondere aber können mit dem erfindungsgemäßen Betriebsverfahren Brennkraftmaschinen nach dem Selbstzünder-Prinzip praktisch vollständig entgiftet werden, was mit den bekannten Betriebsverfahren bis heute nicht möglich ist. Denn aufgrund des erfindungsgemäßen Betriebsverfahrens ist es möglich, die Verbrennungstemperatur und damit den Wirkungsgrad von Brennkraftmaschinen nach dem Selbstzünder-Prinzip anzuheben, da der erhöhte Anfall von Stickoxiden dadurch beseitigt wird, indem die zur vollständigen Reduktion notwendige Menge an Kohlenmonoxid aus einer Kohlenmonoxidquelle zugeführt wird. Da nicht mehr die Entstehung von Stickoxiden im status nascendi so gering wie möglich gehalten zu werden braucht, sind deshalb erheblich höhere Verbrennungstemperaturen möglich, weshalb eine erheblich bessere Ausnutzung der im Dieselkraftstoff enthaltenen Energie und ein günstigeres Leistungsgewicht der Brennkraftmaschine die Folge sind. Die Anhebung der Verbrennungstemperaturen und damit die Verbrennung bei Sauerstoffüberschuß bewirken eine vollständig rußfreie Verbrennung des Dieselkraftstoffs, weshalb überhaupt die Abgase unter Zumischung von zusätzlichem Kohlenmonoxid einem bekannten Katalysator zugeführt werden können, ohne daß dieser durch Ruß verunreinigt und dadurch nach kurzer Zeit wirkungslos wird.

In vorteilhafter Weise erhöht die Kombination mehrerer Lambda-Regelkreise den motortechnischen Spielraum und den Bereich des «Lambda-Fensters» und führt dem Katalysator, unabhängig von der Temperatur – z.B. Kaltstart- und Fahrverhalten – stets ein Abgasgemisch mit optimaler Zusammensetzung im Hinblick auf die anschließende katalytische Entgiftung zu.

Ein weiterer Vorteil des Betriebsverfahrens bei der Verwendung einer Brennnkraftmaschine mit je einer Brennraumeinheit nach dem Selbstzünder- und dem Fremdzünder- Prinzip besteht darin, daß weiterhin Dieselöle und Benzine für den Verbrauch in Kraftfahrzeugen in einer bestimmten Relation zueinander benötigt werden, so daß die Mengenverhältnisse der Benzine und Dieselöle bei ihrer Herstellung gewahrt werden können und keine übermäßige Verschiebung der Verbrauchsverhältnisse zu den Dieselölen oder zu den Benzinen zu erwarten ist.

Wesentlich ist somit, daß von den Hauptschadstoffkomponenten quantitativ jeweils getrennt soviel erzeugt werden, daß diese bei Zusammenführung katalytisch vollständig oxidiert bzw. reduziert werden, das heißt, daß immer soviel Kohlenmonoxid zur Verfügung steht, wie zur vollständigen Reduktion der Stickoxide notwendig ist.

Das erfindungsgemäße Betriebsverfahren dient bevorzugt zum Einsatz für bewegliche Fahrzeuge oder für stationär betriebene Dieselmotoren.

Zwei Beispiele der Vorrichtung zur Durchführung des Verfahrens sind in der Zeichnung dargestellt und beschrieben.

Dabei zeigen:

Figur 1 den prinzipiellen Aufbau einer Brennkraftmaschine zur Anwendung des erfindungsgemäßen Betriebsverfahrens, wobei die Brennräume in zwei voneinander unabhängig versorgte und geregelte Brennraumeinheiten unterteilt sind und

Figur 2 den prinzipiellen Aufbau einer Brennkraftmaschine mit zwei Brennraumeinheiten mit je einem Brennraum, von denen einer nach dem Selbstzünder-Prinzip, der andere nach dem Fremdzünder-Prinzip arbeitet und beide Brennraumeinheiten mittels zweier unabhängiger Kraftstoffaufbereitungsanlagen unabhängig voneinander versorgt und geregelt werden.

In den Figuren sind gleiche Teile mit gleichen Bezugszeichen gekennzeichnet.

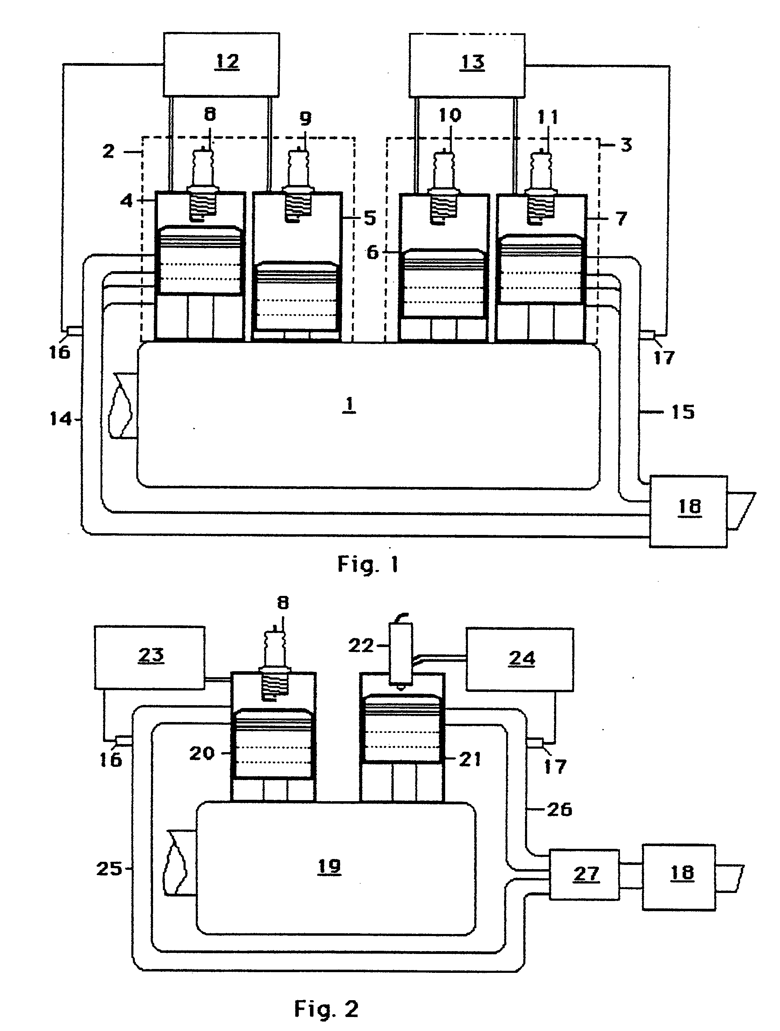

In Figur 1 ist schematisch eine Brennkraftmaschine 1 nach dem Fremdzünder-Prinzip dargestellt, die in zwei Brennraumeinheiten 2, 3 aufgeteilt ist, die Zylinder 4, 5 und Zylinder 6, 7 umfassen, die jeweils mit Zündkerzen 8, 9, 10, 11 zur Darstellung des Fremdzünder-Prinzips ausgestattet sind. Von den zu Brennraumeinheiten zusammengefaßten Zylindern führen unter sich zusammengefaßt Abgasleitungen 14, 15 weg, die in einen bekannten Katalysator 18 münden.

Den Brennraumeinheiten 2, 3 der Brennkraftmaschine 1 sind je eine Kraftstoffaufbereitungsanlage 12, 13 zugeordnet, wobei in den zugehörigen Abgasleitungen 14, 15, die jeweils die Abgasleitungen einer Brennraumeinheit zusammenfassen, Sonden, beispielsweise solche zur Messung des Sauerstoffs in den Abgasen, z.B. Lambda-Sonden 16, 17, oder zur Messung der Abgase selbst, angeordnet sind, die mit den Kraftstoffaufbereitungsanlagen zu deren Regelung in Wirkverbindung stehen. Die Kraftstoffaufbereitungsanlagen 12, 13 sind unabhängig voneinander regelbar, so daß die Brennraumeinheiten 2, 3 der Brennräume 4, 5 bzw. 6, 7 unabhängig voneinander getrennt arbeiten, mit Kraftstoff versorgt werden und unabhängig voneinander über die zugeordneten Lambda-Sonden 16, 17 in ihrem Kraftstoff-Luft-Verhältnis regelbar sind. Der Katalysator 18 ist vorzugsweise ein bekannter Einbett-Dreiweg-Katalysator, in welchem die Entgiftung der zusammengeführten Abgase erfolgt.

Beim Betrieb der Brennkraftmaschine 1 erzeugen die Brennräume 4, 5 und 6, 7 unabhängig voneinander individuell geregelt mittels geeigneter Sensorik oder geeigneter Sensoren, beispielsweise unter Hilfe eines CO-Sensors nach dem Katalysator, die Hauptschadstoff-Komponenten CO und $NO_X$ in einem derartigen Verhältnis zueinander, daß nach der Zusammenführung der Abgase eine praktisch vollständige katalytische Entgiftung in bekannter Weise gewährleistet ist. Individuell werden die Brennvorgänge bezüglich der Anteile der Hauptschadstoffkomponenten an CO und $NO_X$ mittels geeigneter Sensorik oder geeigneter Sensoren so geregelt, daß quantitativ bestimmte Anteile der Hauptschadstoffkomponenten in den Abgasen bevorzugt anfallen wobei die Einhaltung dieser bestimmten Anteile nach der Zusammenführung der Abgase praktisch zu einer vollständigen Entgiftung mit bekannten katalytischen Systemen führt.

Figur 2 zeigt eine Brennkraftmaschine 19 mit einem Brennraum 20 rach dem Fremdzünder-Prinzip und einem Brennraum 21 nach dem Selbstzünder-Prinzip, die unabhängig voneinander arbeiten, wobei zur Kenntlichmachung dieser Ausgestaltung der Zylinder 20 eine Zündkerze 8, der Zylinder 21 eine Diesel-Einspritzdüse 22 aufweisen. Den Brennräumen der Zylinder 20, 21 ist je eine getrennt regelbare Kraftstoffaufbereitungsanlage 23, 24 zugeordnet. Abgasleitungen 25, 26 führen von den Brennräumen 20, 21 in einen Mischer 27 zur Vermischung der Abgase und von diesem zum bekannten Katalysator 18. In den Abgasleitungen 25, 26 sind je eine Sonde, z.B. eine Lambda-Sonde 16, 17, angeordnet, die wirkungsmäßig mit den zugehörigen Kraftstoffaufbereitungsanlagen 23, 24 verbunden sind.

In dieser beispielsweisen Ausgestaltung erzeugt der Brennraum 20 nach dem Fremdzünder-Prinzip das Kohlenmonoxid, welches zur Reduktion der Stickoxide aus dem Brennraum 21 notwendig ist. Leistungsmäßig können die Brennräume 20, 21 gleich oder ungefähr gleich ausgelegt sein, jedenfalls erzeugen beide Brennraumeinheiten gemeinsam die Gesamtleistung. Bezüglich des Betriebes der Brennkraftmaschine 19 gelten gleichermaßen die Ausführungen zur Erläuterung des Betriebes der Brennkraftmaschine 1 der Figur 1.

Liste der Bezugszeichen:

1 Brennkraftmaschine
2, 3 Brennraumeinheiten von Brennräumen gleicher Bauart
4, 5, 6, 7 Brennräume nach dem Selbstzünder-Prinzip
8, 9, 10, 11 Zündkerzen
12, 13 Kraftstoffaufbereitungsanlagen
14, 15 Abgasleitungen
16, 17 Lambda-Sonden
18 Katalysator
19 Brennkraftmaschine
20 Brennraum nach dem Fremdzünder-Prinzip
21 Brennraum nach dem Selbstzünder-Prinzip
22 Diesel-Einspritzdüse
23, 24 Kraftstoffaufbereitungsanlagen
25, 26 Abgasleitungen
27 Mischer

## Patentansprüche

1. Betriebsverfahren einer Brennkraftmaschine (1; 19) mit einer ersten und einer zweiten Brennraumeinheit (2, 3; 20, 21), die mindestens je einen Brennraum (4, 5, 6, 7; 20, 21) umfaßt, und mit einem katalytischen Abgasreiniger (18), der mit den Abgasen aller Brennräume (4, 5, 6, 7; 20, 21) der Brennkraftmaschine (1; 19) beschickt wird, wobei die Brennkraftmaschine (1; 19) eine erste geregelte Kraftstoffaufbereitungsanlage (12; 23), die Kraftstoff der ersten Brennraumeinheit (2; 20) zumißt, und eine zweite regelbare Kraftstoffaufbereitungsanlage (13; 24) aufweist, und die erste und zweite Kraftstoffaufbereitungsanlage (12, 13; 23, 24) den Brennraumeinheiten (2, 3; 20, 21) derart Kraftstoff zumessen, daß je Brennraum (4, 5, 6, 7; 20, 21) unterschiedliche Verhältnisse in den Anteilen der Hauptschadstoffkomponenten Kohlenmonoxid (CO) und Stickoxide (NO$_X$) entstehen, dadurch gekennzeichnet, daß eine der Kraftstoffaufbereitungsanlagen (12, 13; 23, 24) derart gesteuert oder geregelt wird, daß in den zugeordneten Brennräumen (4, 5, 6, 7; 20, 21) der betreffenden Brennraumeinheit (2, 3; 20, 21) bevorzugt eine der Hauptschadstoffkomponenten entsteht, während die andere Kraftstoffaufbereitungsanlage geregelt die Entstehung der komplementären Hauptschadstoffanteile in der zweiten Brennraumeinheit (2, 3; 20, 21) zur quantitativen katalytischen Abgasreinigung bewirkt.

2. Brennkraftmaschine (1; 19) zur Durchführung des Betriebsverfahrens nach Anspruch 1, mit einer ersten und einer zweiten Brennraumeinheit (2, 3; 20, 21), die mindestens je einen Brennraum (4, 5, 6, 7; 20, 21) umfaßt, und mit einem katalytischen Abgasreiniger (18), der mit den Abgasen aller Brennräume (4, 5, 6, 7; 20, 21) der Brennkraftmaschine (1; 19) beschickt wird, wobei die Brennkraftmaschine (1; 19) eine erste geregelte Kraftstoffaufbereitungsanlage (12; 23), die Kraftstoff der ersten Brennraumeinheit (2; 20) zumißt, und eine zweite regelbare Kraftstoffaufbereitungsanlage (13; 24) aufweist und beide Kraftstoffaufbereitungsanlagen (12, 13; 23, 24) derart einstellbar sind, daß je Brennraum (4, 5, 6, 7; 20, 21) unterschiedliche Verhältnisse in den Anteilen der Hauptschadstoffkomponenten Kohlenmonoxid (CO) und Stickoxide (NO$_X$) entstehen, dadurch gekennzeichnet, daß die eine der Kraftstoffaufbereitungsanlage (12, 13; 23, 24) derart steuerbar oder regelbar ist, daß in den zugeordneten Brennräumen (4, 5, 6, 7; 20, 21) der Brennraumeinheit (2, 3; 20, 21) bevorzugt eine der Hauptschadstoffkomponenten entsteht, während die andere Kraftstoffaufbereitungsanlage (12, 13; 23, 24) geregelt die Entstehung der komplementären Hauptschadstoffanteile in der zweiten Brennraumeinheit (2, 3; 20, 21) zur quantitativen katalytischen Abgasreinigung zu bewirken imstande ist.

3. Brennkraftmaschine (1) nach Anspruch 2, dadurch gekennzeichnet, daß die Brennräume (4, 5, 6, 7) der Brennkraftmaschine (1) nach dem Fremdzünder-Prinzip arbeiten.

4. Brennkraftmaschine nach Anspruch 2, dadurch gekennzeichnet, daß die Brennräume (20, 21) der Brennkraftmaschine (19) eine Kombination aus nach dem Fremdzünder- und dem Selbstzünder-Prinzip arbeitende sind und mindestens je einen Brennraum (20; 21) für das Fremdzünder- und das Selbstzünder Prinzip vorhanden ist.

5. Brennkraftmaschine nach Anspruch 2, dadurch gekennzeichnet, daß die Brennräume (4, 5, 6, 7; 20, 21) der Brennkraftmaschine (1; 19) zu Brennraumeinheiten (2, 3; 20, 21) gleicher Bauart zusammengefaßt sind.

6. Brennkraftmaschine nach Anspruch 2, dadurch gekennzeichnet, daß von den Kraftstoffaufbereitungsanlagen (12, 13; 23, 24) eine konstant eingestellt und die andere geregelt ist oder eine ungeregelt und die andere geregelt ist.

## Claims

1. Operating process of an internal combustion engine (1; 19) with a first and a second combustion chamber unit (2, 3; 20, 21), each of which comprises at least one combustion chamber (4, 5, 6, 7; 20, 21), and with a catalytic exhaust-gas converter (18), which receives the exhaust gases from all of the cumbustion chambers (4, 5, 6, 7; 20, 21) of the internal combustion engine (1; 19), whereby the internal combustion engine (1; 19) has a first controlled fuel-treatment system (12; 23) that doses the fuel of the first combustion chamber unit (2; 20) and a second controlled fuel-treatment system (13; 24), and the first and second fuel-treatment systems (12, 13; 23, 24) dose fuel to the combustion chamber units (2, 3; 20, 21) in such a manner that, in each combustion chamber (4, 5, 6, 7; 20, 21), different conditions arise regarding the proportions of the main pollutant components carbon monoxide (CO) and nitrogen oxides (NO$_X$), characterized in that one of the fuel-treatment systems (12, 13; 23, 24) is controlled or regulated in such a way that, in the appertaining combustion chambers (4, 5, 6, 7; 20, 21) of the corresponding combustion chamber unit (2, 3; 20, 21), preferably one of the main pollutant components is formed, whereas, in a controlled manner, the other fuel-treatment system effectuates the formation of the complementary main pollutant components in the second combustion chamber unit (2, 3; 20, 21) for quantitative catalytic exhaust-gas conversion.

2. Internal combustion engine (1; 19) for carrying out the operating process according to claim 1, with a first and a second combustion chamber unit (2, 3; 20, 21), each of which comprises at least one combustion chamber (4, 5, 6, 7; 20, 21), and with a catalytic exhaust gas converter (18), which receives the exhaust gases from all of the combustion chambers (4, 5, 6, 7; 20, 21) of the internal combustion engine (1; 19), whereby the internal combustion engine (1; 19) has a first controlled fuel-treatment system (12; 23) that doses the fuel of the first combustion chamber unit (2; 20), and a second controlled fuel-treatment system (13; 24), and both fuel-treatment systems (12, 13; 23, 24) can be regulated in such a way that, in each combustion chamber (4, 5, 6, 7; 20, 21), different conditions arise regarding the proportions of the main pollutant components carbon monoxide (CO) and nitrogen oxides (NO$_X$), characterized in that one of the fuel-treatment systems (12, 13; 23, 24) can be controlled or regulated in such a way that, in the appertaining combustion chambers (4, 5, 6, 7; 20, 21) of the corresponding combustion chamber unit (2, 3; 20, 21), preferably one of the main pollutant components is formed, whereas, in a controlled manner, the other fuel-treatment system (12, 13; 23, 24) is capable of effectuating the formation of the complementary main pollutant components in the second combustion chamber unit (2, 3; 20, 21) for quantitative catalytic exhaust gas conversion.

3. Internal combustion engine (1) according to claim 2, characterized in that the combustion chambers (4, 5, 6, 7) of the internal combustion engine (1) work according to the spark ignition principle.

4. Internal combustion engine (1) according to claim 2, characterized in that the combustion chambers (20, 21) of the internal combustion engine (19) form a combination that functions according to the spark ignition principle and according to the auto-ignition principle, and in that there is at least one combustion chamber (20, 21) each for the spark ignition principle and for the auto-ignition principle.

5. Internal combustion engine (1) according to claim 2, characterized in that the combustion chambers (4, 5, 6, 7; 20, 21) of the internal combustion engine (1; 19) are combined to form combustion units (2, 3; 20, 21) of the same type.

6. Internal combustion engine according to claim 2, characterized in that one of the fuel-treatment systems (12, 13; 23, 24) is constantly adjusted while the other one is regulated, or else one of them is unregulated while the other one is regulated.

## Revendications

1. Procédé opératoire d'un moteur à combustion interne (1; 19) comportant une première et une seconde unité de combustion (2, 3; 20, 21) dont chacune présente au moins une chambre de combustion (4, 5, 6, 7; 20, 21), ainsi qu'un épurateur catalytique des gaz d'échappement (18) qui reçoit les gaz d'échappement provenant de toutes les chambres de combustion (4, 5, 6, 7; 20, 21) du moteur à combustion interne (1; 19), ledit moteur à combustion interne (1; 19) présentant une première installation réglée de préparation du carburant (12; 23) qui dose le carburant pour la première unité de combustion (2; 20) ainsi qu'une seconde installation réglable de préparation du carburant (13; 24), et la première et la seconde installation de préparation du carburant (12, 13; 23, 24) alimentant les unités de combustion (2, 3; 20, 21) en carburant de sorte que des concentrations différentes des composants polluants principaux, à savoir de l'oxyde de carbone (CO) et des oxydes nitriques (NOx) se forment dans les chambres de combustion (4, 5, 6, 7; 20, 21) individuelles, caractérisé en ce que l'une des installations de préparation du carburant (12, 13; 23, 24) est commandée ou réglée de telle manière que, dans les chambres de combustion respectives (4, 5, 6, 7; 20, 21) de l'unité de combustion concernée (2, 3; 20, 21), il se forme de préférence l'un des composants polluants principaux, tandis que l'autre installation de préparation du carburant engendre de façon réglée la formation des composants polluants principaux complémentaires dans la seconde unité de combustion (2, 3; 20, 21) pour l'épuration catalytique quantitative des gaz d'échappement.

2. Moteur à combustion interne (1; 19) pour la mise en oeuvre du procédé opératoire selon la revendication 1, comportant une première et une seconde unité de combustion (2, 3; 20, 21) dont chacune présente au moins une chambre de combustion (4, 5, 6, 7; 20, 21), ainsi qu'un épurateur catalytique des gaz d'échappement (18) qui reçoit les gaz d'échappement de toutes les chambres de combustion (4, 5, 6, 7; 20, 21) du moteur à combustion interne (1; 19), ledit moteur à combustion interne (1; 19) présentant une première installation réglée de préparation du carburant (12; 23) qui dose le carburant pour la première unité de combustion (2; 20) ainsi qu'une seconde installation réglable de préparation du carburant (13; 24) et les deux installations de préparation du carburant (12, 13; 23, 24) pouvant être réglées de sorte que dans chaque chambre de combustion (4, 5, 6, 7; 20, 21), il se forme des concentrations différentes des composants polluants principaux, à savoir de l'oxyde de carbone (CO) et des oxydes nitriques (NOx), caractérisé en ce que l'une des installations de préparation du carburant (12, 13; 23, 24) peut être commandée ou réglée de telle manière que, dans les chambres de combustion respectives (4, 5, 6, 7; 20, 21) de l'unité de combustion (2, 3; 20, 21), il se forme de préférence l'un des composants polluants principaux, tandis que l'autre installation de préparation du carburant (12, 13; 23, 24) est en mesure d'engendrer de façon réglée la formation des composants polluants principaux complémentaires dans la seconde unité de combustion pour l'épuration catalytique quantitative des gaz d'échappement.

3. Moteur à combustion interne (1) selon la revendication 2, caractérisé en ce que les chambres de combustion (4, 5, 6, 7) du moteur à combustion interne (1) travaillent selon le principe d'allumage à étincelles.

4. Moteur à combustion interne selon la revendication 2, caractérisé en ce que les chambres de combustion (20, 21) du moteur à combustion interne (19) travaillent de façon combinée selon les principes d'allumage à étincelles et d'allumage spontané et qu'il comporte au moins une chambre de combustion (20; 21) travaillant selon le principe d'allumage à étincelles et une autre selon le principe d'allumage spontané.

5. Moteur à combustion interne selon la revendication 2, caractérisé en ce que les chambres de combustion (4, 5, 6, 7; 20, 21) du moteur à combustion interne (1; 19) sont groupées en unités de combustion (2, 3; 20, 21) de la même construction.

6. Moteur à combustion interne selon la revendication 2, caractérisé en ce que l'une des installations de préparation du carburant (12, 13; 23, 24) est mise au point à des valeurs prédéterminées et l'autre est réglée, ou que l'une est réglée et l'autre non.

Fig. 1

Fig. 2